# EUROPEAN PATENT SPECIFICATION

(11) **EP 4 196 389 B1**
(45) Date of publication and mention of the grant of the patent: **14.02.2024**
(21) Application number: 21798133.1
(22) Date of filing: 25.10.2021
(51) Int. Cl.: B62K 25/24

(54) **AN OSCILLATING ARM FRONT SUSPENSION FOR SADDLE RIDING VEHICLES**
VORDERRADAUFHÄNGUNG MIT SCHWINGARM FÜR SATTELFAHRZEUGE
SUSPENSION AVANT DE BRAS OSCILLANT POUR VÉHICULES À SELLE

(30) Priority: 17.12.2020 IT 202000031181
(43) Date of publication of application: 21.06.2023
(73) Proprietor: Piaggio & C. SpA, 56025 Pontedera (IT)
(72) Inventor: RAFFAELLI, Andrea, 56025 Pontedera (IT); MARIOTTI, Valentino, 56025 Pontedera (IT); SANTUCCI, Mario Donato, 56025 Pontedera (IT)
(74) Representative: Carangelo, Pierluigi
(86) International application number: PCT/IB2021/059826
(87) International publication number: WO 2022/130051

(56) References cited:
- FR-A1- 2 418 742
- FR-A1- 2 962 970
- FR-A1- 2 967 641
- US-A- 4 533 153
- US-A- 5 431 426
- US-A- 6 155 370

## Description

### TECHNICAL FIELD OF THE INVENTION

The present invention relates to the technical field of suspensions for transport vehicles and relates, in particular, to an oscillating arm front suspension for saddle riding vehicles.

### BACKGROUND OF THE INVENTION

In the field of saddle riding vehicles, such as, for example motorcycles, it is known to provide, in the forecarriage of the vehicle, an oscillating arm suspension, which therefore represents a front suspension. An oscillating arm front suspension, which can be both a single-arm suspension and a double-arm suspension, generally comprises a rigid arm, also referred to as a steering bar. The steering bar is mechanically connected to the steering handlebar of the saddle riding vehicle.

In an oscillating arm front suspension, a first end portion of an oscillating arm is generally rotatably hinged to the steering bar. The oscillating arm has a second end portion, opposite to the first end portion, carrying the rotation pin of the front wheel.

Such an oscillating arm front suspension further comprises a shock absorber assembly typically including a spring and a damper, e.g. a hydraulic or pneumatic damper. The shock absorber assembly extends between a attachment head and a attachment foot. The attachment head is connected to the steering bar; the attachment foot, by means of a support bracket, is rotatably hinged to the rotation pin of the front wheel. A caliper for a disk brake, or the fixed part of a drum brake, is generally fastened to the support bracket. An oscillating arm front suspension of the type described above is disclosed, for example, in the European patent EP 2996929 B1.

Oscillating arm front suspensions of the prior art described above have the drawback of not reacting optimally to loads, being characterized by a marked pro-dive or anti-dive effect, defined by the trajectory, which covers the instantaneous rotation center of the front wheel assembly with the diving of the suspension on braking, whereby also the point of contact on the ground of the tire of the front wheel follows a complex trajectory.

Furthermore, in known oscillating arm front suspensions, wherein the body of the shock absorber is integral with the support of the brake caliper, which is free to rotate on the wheel axis, the braking torque produced by the actuation of the front brake subjects the stem to bending stress, which determines sliding friction in the sheath and which can also compromise the seal of the damper and therefore damage the shock absorber assembly.

International patent application WO 2019207445 A1 describes a motorcycle front suspension, which has a capacity to react optimally to loads, allowing reducing or eliminating the pro-dive or anti-dive effect of the oscillating arm front suspensions of the prior art. However, in order to ensure the sliding of the damper, such known suspension requires covering the sheath with a jacket defining a telescopic guide.

US 6 155 370 discloses the features of the preamble of claim 1.

It is a general object of the present description to provide an oscillating arm front suspension for saddle riding vehicles, which is capable of overcoming, or at least reducing the above drawbacks, with reference to the oscillating arm suspensions of the prior art.

Such object is achieved by means of an oscillating arm front suspension, as defined generally in claim 1. Preferred and advantageous embodiments of the aforesaid suspension are defined in the appended dependent claims.

The invention will be better understood from the following detailed description of particular embodiments thereof, given by way of non-limiting example, with reference to the accompanying drawings briefly described in the following paragraph.

### BRIEF DESCRIPTION OF THE DRAWINGS

Figure 1 is a side view of an exemplary and non-limiting embodiment of a saddle riding vehicle, in particular, a motorcycle, comprising an oscillating arm front suspension.
Figure 2 is a side view of a part of the vehicle in figure 1 in which the front suspension of the vehicle is shown in greater detail.
Figure 3 is a side view similar to the one in figure 2 from which some components have been removed, such as the front wheel and the shock absorber assembly.
Figure 4 is a sectional view of the front suspension along the sectional plane Z-Z shown in figure 2.
Figure 5 is a distribution diagram regarding the pro-dive and anti-dive behavior of a suspension.
Figures 6-8 are diagrams of an oscillating arm suspension, which, as the diving of the suspension increases, have a decreasing pro-dive behavior;
Figures 9-11 are diagrams of an oscillating arm suspension, which, as the diving of the suspension increases, have a decreasing pro-dive behavior until about half travel of the suspension and then an increasing anti-dive behavior.
Figure 12 is a side view of an oscillating arm of the front suspension in figure 2.
Figure 13 is a longitudinal sectional view of the oscillating arm in figure 12 along the sectional axis Y-Y shown in figure 12.

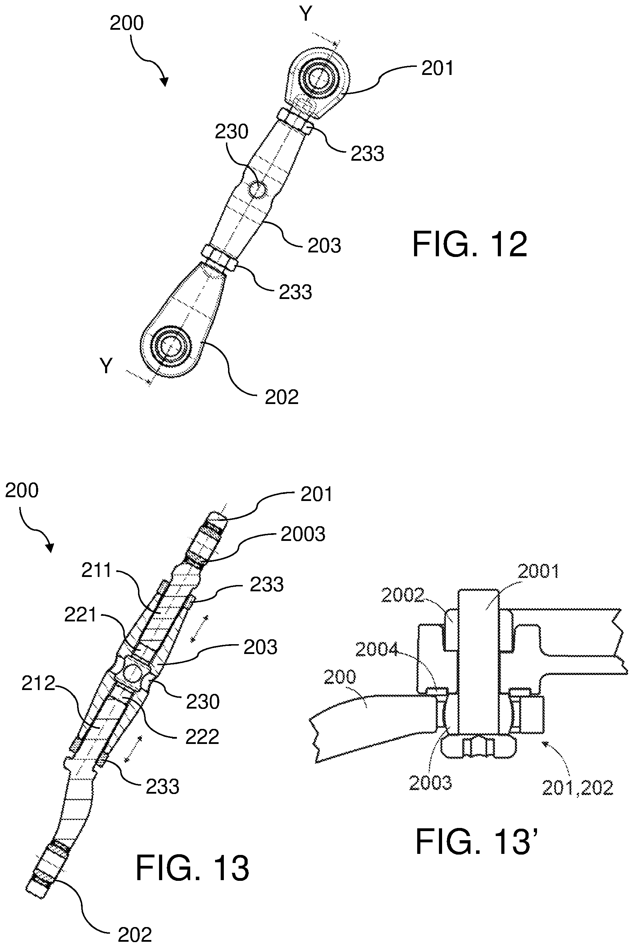

Figure 13' is a sectional view of a part of the front suspension.

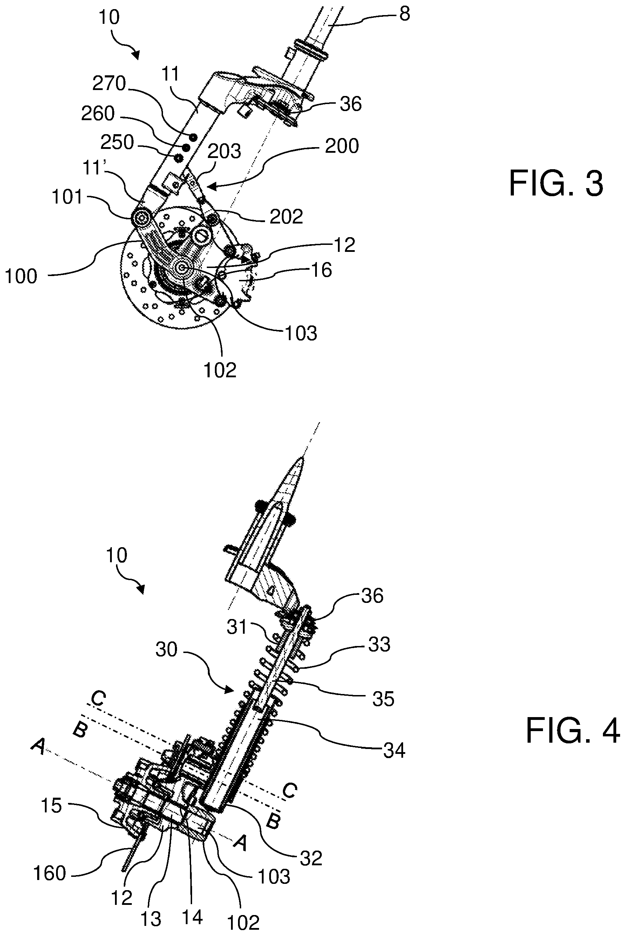

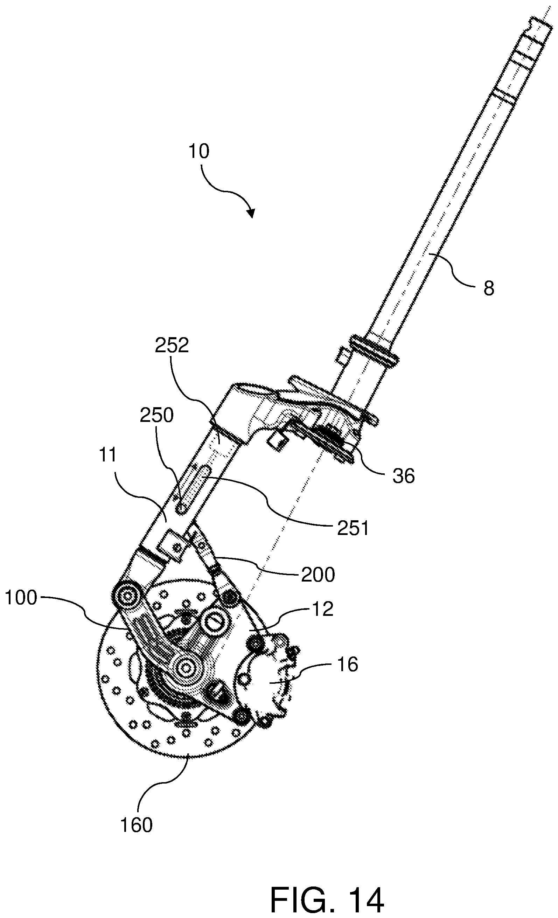

Figure 14 is a similar view to the one in figure 3 showing a further embodiment of the front suspension.

### DETAILED DESCRIPTION

Equal or similar elements are indicated in the accompanying figures using the same reference numerals.

An embodiment of a saddle riding vehicle and, in particular, of a motorcycle 1, is shown in the accompanying figures. In the particular example shown in the figures, the motorcycle 1 takes the form of a scooter, without thereby introducing any limitation, comprising a front wheel 2 and a rear wheel 3, an engine 4, a support frame 5, a saddle 6, a steering handlebar 7 rotatably fastened to the support frame 5.

Hereinafter, in the present description, without thereby introducing any limitation, reference will be made to a general motorcycle 1, meaning that the following description may generally be applied to any type of saddle riding vehicle comprising:
- a support frame 5;
- at least two wheels 2,3 constrained to the support frame 5;
- an engine 4, e.g., a thermal or electric or hybrid traction engine, constrained to the support frame 5 and operatively connected, either directly or indirectly, to at least one of the two wheels 2,3.

In the particular example shown in the figures, without thereby introducing any limitation, the support frame 5 is a self-supporting chassis.

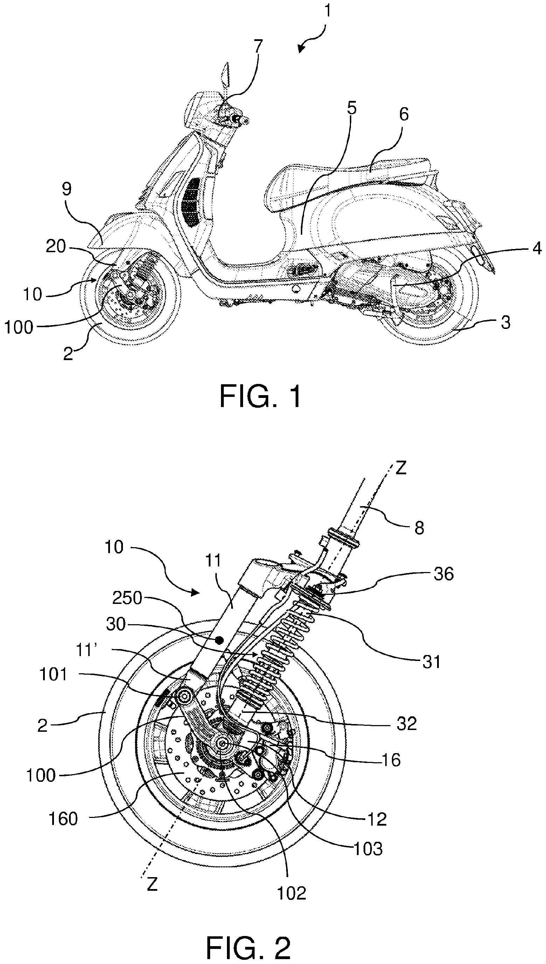

The motorcycle 1 comprises a steering tube 8 (Fig.2) fastened to the steering handlebar 7 so as to rotate integrally with the latter. The motorcycle 1 further comprises a front mudguard 9, preferably fastened directly or indirectly, to the steering tube 8 so as to rotate integrally with the latter. In the example shown in the figures, the engine 4 is a thermal traction engine operatively connected to the rear wheel 3.

As better shown in figure 2, the motorcycle 1 further comprises an oscillating arm front suspension 10 adapted and configured to fasten the front wheel 2 to the steering tube 8, so that said front suspension 10 is operatively interposed between the steering tube 8 and the front wheel 2. In the particular example shown in figure 1, without thereby introducing any limitation, part of the front suspension 10 is covered by a covering shell 20 the function of which is substantially linked to needs of an esthetic nature. Such covering shell 20 has been removed in the remaining figures.

The oscillating arm front suspension 10 comprises a steering bar 11, mechanically connected or adapted to be connected to the steering handlebar 7 of the motorcycle 1. In the particular non-limiting example shown in figures 2 and 3, the steering bar 11 has an upper end portion mechanically coupled to the steering tube 8, so as to rotate integrally with the latter. In the particular non-limiting example shown in the accompanying figures, the steering bar 11 is a circular cross-section bar, such as a cylindrical bar, e.g. tubular.

In the embodiment shown in the figures without thereby introducing any limitation, the steering bar 11 is arranged cantilevered with respect to the steering tube 8 so that the plane of symmetry of the associable front wheel 2 passes along the steering axis.

The oscillating arm front suspension 10 further comprises a first oscillating arm 100 having a first end portion 101 and a second end portion 102 opposite to the first end portion 101.

The first end portion 101 of the first oscillating arm 100 is rotatably joined to the steering bar 11, preferably at an end portion 11' of the steering bar 11. The first oscillating arm 100 carries a rotation pin 103 of the associable front wheel 2 of the motorcycle 1. In particular, the rotation pin 103 is directly supported on the first oscillating arm 100.

In detail, the rotation pin 103 defines a rotation axis A-A for the front wheel 2. Preferably, the rotation pin 103 has an end portion forcibly engaged and clamped by interference inside a seat defined in the second end portion 102 of the first oscillating arm 100. More preferably, the rotation pin 103 is clamped inside said seat so as to prevent a rotation of the rotation pin 103 with respect to the first oscillating arm 100.

The oscillating arm front suspension 10 further comprises a shock absorber assembly 30, which extends between a attachment head 31 and a attachment foot 32.

According to an embodiment, the shock absorber assembly 30 comprises a spring 33 and a damper 34,35, e.g. a hydraulic or pneumatic damper. For example, the spring 33 is a coil spring interposed between the attachment head 31 and the attachment foot 32 of the shock absorber assembly 30 in order to exert an elastic thrust force, which tends to distance the attachment head 31 and the attachment foot 32 from each other. The spring 33 preferably surrounds the damper 34, 35. The damper 34,35 preferably comprises a sheath 34 and a stem 35 having at least one portion adapted and configured to slide inside the sheath 34.

The attachment head 31 of the shock absorber assembly 30 is mechanically connected to the steering bar 11, with a cylindrical hinge directed along an axis parallel to the axes A, B and C. Such cylindrical hinge can be replaced with a spherical hinge made with a "unibal" or, more advantageously by means of an elastic bush 36, e.g. by means of a silentblock.

The oscillating arm front suspension 10 further comprises:
- a support element 12 of the shock absorber assembly 30 to which the attachment foot 32 is rotatably joined, e.g. to which the attachment foot 32 is rotatably hinged;
- a second oscillating arm 200 operatively interposed between the steering bar 11 and the support element 12 and rotatably joined to the steering bar 11 and to the support element 12.

According to a particularly advantageous embodiment, the rotation pin 103 defines a first rotation axis A-A, the attachment foot 32 is rotatably joined to the support element 12 so as to rotate about a second rotation axis B-B and the second oscillating arm 200 is rotatably joined to the support element 12 so as to rotate about a third rotation axis C-C (Figure 4). Said first, said second and said third rotation axes are mutually aligned along the same plane. However, said first, said second and said third rotation axes may also not be mutually aligned.

The first oscillating arm 100 and the second oscillating arm 200 may be mutually parallel or tilted. Furthermore, as will be better explained below, the first oscillating arm 100 and the second oscillating arm 200 can have the same length or a different length to each other.

According to an advantageous embodiment, the second oscillating arm 200 has a first end portion 201 rotatably joined, for example, hinged, to the steering bar 11 and a second end portion 202 rotatably joined, for example, hinged, to the support element 12. The support element 12 is, for example, or comprises a support bracket.

The ends 201 and 202 can be connected to the respective parts of the suspension by means of cylindrical hinges. Alternatively, as shown in figures 13 and 13' the ends 201 and 202 comprise respective ball joints 2003. This last embodiment is equally functional even if it introduces a greater number of degrees of freedom with respect to those necessary and sufficient for the cylindrical hinges.

Preferably, associated with the spherical hinges 2003, abutment elements 2004 are comprised, e.g. washers made of a plastic or similar material. Such abutment elements 2004 substantially limit the rotation of the second oscillating arm 200 about the axis thereof.

Structurally, the spherical hinges 2003 are mounted onto at least one of the ends 201, 202, or both, and they are inserted into the connection of the arm 200 comprising a pin 2001 clamped by a clamping element 2202, such as, for example, a clamping nut. The abutment elements 2004 are in contact with the second oscillating arm 200 and limit the movement thereof about the rotation axis thereof.

According to a particularly advantageous embodiment, the steering bar 11, the first oscillating arm 100, the support element 12, and the second oscillating arm 200 are operatively connected to one another so as to form a four-bar linkage. In such four-bar linkage, the first oscillating arm 100 and the second oscillating arm 200 form a first pair of mutually opposite elements of the four-bar linkage, and the steering bar 11 and the support element 12 form a second pair of mutually opposite elements of the four-bar linkage.

According to a particularly advantageous embodiment, the steering bar 11, the first oscillating arm 100, the support element 12 and the second oscillating arm 200 are operatively connected to one another forming a four-bar kinematic system, wherein, in a kinematic diagram, the steering bar 11 forms the fixed element, the support element 12 forms a connecting rod and the first oscillating arm 200 and the second oscillating arm 20 form the two cranks.

According to an embodiment, the first oscillating arm 100, the second oscillating arm 200 and the support element 12 are arranged and shaped so as not to exceed the radial occupancy of the associable front wheel 2. This solution has the advantage of having a highly reduced esthetic impact.

According to a preferred embodiment, the support element 12 is rotatably joined to the rotation pin 103 of the front wheel 2, e.g. it is rotatably hinged on the rotation pin 103. Preferably, the rotation pin 103 protrudes from the first oscillating arm 100 engaging inside a seat 13 defined in the support element 12, crossing it completely so as to exit the opposite side with respect to the entrance side and protrude from such seat 13 so as to allow the engagement of the hub 15 of the front wheel 2 on a protruding portion of the rotation pin 103.

According to an advantageous embodiment, at least one bearing 14, e.g. a ball or needle bearing, is operatively interposed between the rotation pin 103 and the seat 13, which is preferably also housed inside the seat 13.

The support element 12 is adapted and configured to support a braking member 16 in particular a braking member acting on the front wheel 2, such as, for example, a caliper for a disk brake 16, or the drum of a drum brake, i.e. the stationary part of the drum brake or, in other words, the part of the drum brake which carries the braking jaws. In the particular example shown in the figures, the support element 12 supports the caliper 16 of the disk brake 16, in which the disk is indicated with reference numeral 160.

Now it will be described how it is possible to vary the behavior of the oscillating arm suspension 10 by varying the structure of the same so as to adjust the diving effect of the suspension 10 during braking.

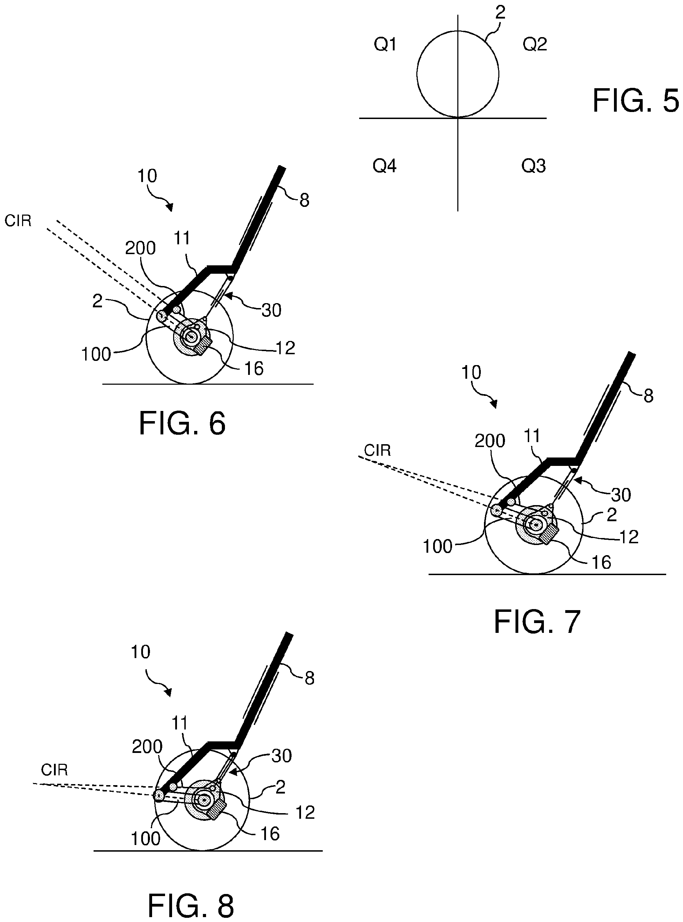

Figure 5 shows a diagram illustrating the behavior of the suspension 10 as a function of the positioning of the instantaneous center of rotation (CIR) of the point of contact on the ground of the tire of the wheel 2. The CIR shown is that of the support element 12 and varies with the diving, describing a curve referred to as the movement curve.

In particular, according to the present invention, the quadrilateral suspension can be kinematically schematized as a pair of cranks, namely the first and second oscillating arm. The pair of cranks moves with respect to the steering bar representing a fixed frame. The cranks of said pair are, on the opposite side with respect to the steering bar, connected to each other by means of a connecting rod element. Said connecting rod element is represented by the support element 12.

The CIR is that of the support element 12 because during braking, the wheel, the brake caliper and support element 12 can be assimilated with one single group. Therefore, the CIR is the one defined by the support element 12, which is mutually connected at opposite ends to the pair of cranks.

A suspension has a pro-dive effect or behavior if the component of the braking force on the ground, orthogonal to the conjunction between the contact point on the ground of the tire and the CIR, compresses the suspension. In this case, such component of the braking force falls within the boxes Q1 or Q3 in figure 5. Whereas, a suspension has an anti-dive effect or behavior if the component of the braking force on the ground, orthogonal to the conjunction between the contact point on the ground of the tire and the CIR, extends the suspension. In this case, such component of the braking force falls within the boxes Q2 or Q4 in figure 5.

Figures 6-8 are diagrammatic views showing the variation of the CIR as a function of the diving of the front suspension 10 when the second oscillating arm 200 is shorter than the first oscillating arm 100. Figure 6 shows the suspension in the extended configuration, figure 7, in the half travel configuration, figure 8, in the maximum compression or maximum diving configuration. Based on the variation of the CIR shown in such figures 6-8, it can be deduced that the front suspension 10 has a decreasing pro-dive behavior with the diving of the suspension.

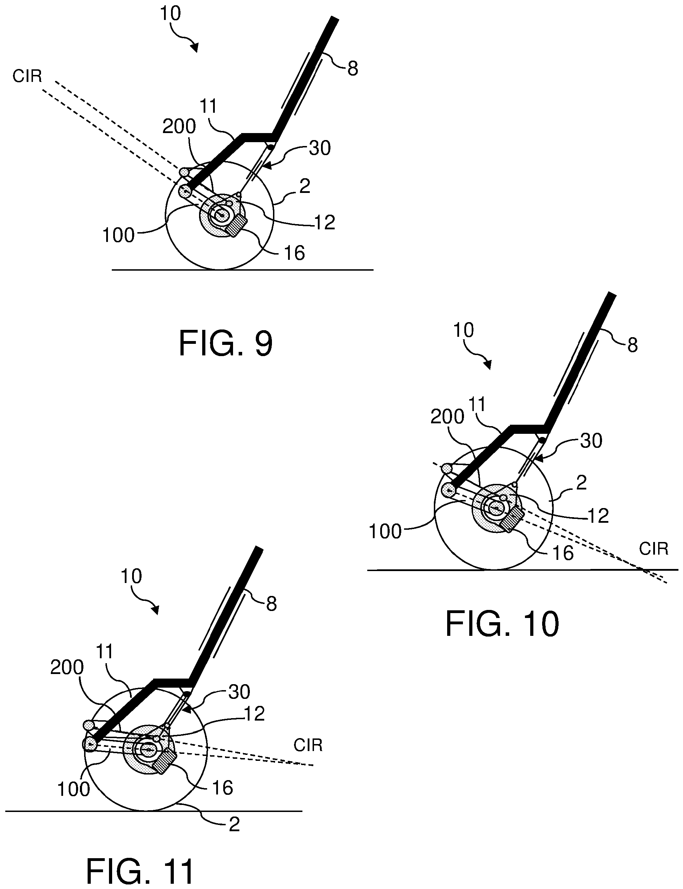

Figures 9-11 are diagrammatic views showing the variation of the CIR as a function of the diving of the front suspension 10 when the second oscillating arm 200 is longer than the first oscillating arm 100. Figure 9 shows the suspension in the extended configuration, figure 10, in the half travel configuration, figure 11, in the maximum compression or maximum diving configuration. Based on the variation of the CIR shown in such figures 9-11, it can be deduced that the front suspension 10 has a decreasing pro-dive behavior with the diving of the suspension until about half travel of the suspension, while, beyond this, it has an increasing anti-dive behavior.

According to a particularly advantageous embodiment, the second oscillating arm 200 is an arm having an adjustable length. For example, the second oscillating arm 200 comprises at least two parts having a portion with a male thread (i.e. a screw portion) and a portion with a female thread (i.e. a nut portion), respectively, adapted to receive the portion having the male thread. By mutually rotating the two parts so as to screw them or unscrew them, it is possible to decrease or increase the length of the second oscillating arm 200, respectively.

For example, figures 12, 13 show an advantageous and non-limiting embodiment of the second oscillating arm 200, wherein the second oscillating arm 200 comprises, besides the first end portion 201 and the second end portion 202, a central portion 203 interposed between the two end portions 201, 202. The first end portion 201 comprises an externally threaded first pin 211 and the second end portion 202 comprises an externally threaded second pin 212. Therefore, said pins 211,212 are provided with respective threads with an opposing thread direction, namely, a right thread and the other, a left thread, or vice versa. The central portion 203 is provided with two opposing internally threaded seats 221, 222 adapted to receive therein, by screwing, the pins 211,212. Therefore, said opposing seats 221,222 are provided with respective female threads. In this way, by varying the degree of screwing between the end portions 201, 202 and the central portion 203 it is possible to vary the length of the second oscillating arm 200, in other words, it is possible to lengthen or shorten the second oscillating arm 200 without disconnecting the ends 201 and 202 from the respective fastenings. In the specific example shown, the central portion 230 comprises at least one engagement and/or gripping element, in particular, an engagement hole 230, for facilitating the rotation of the central element 203 with respect to the end portions 201,202 e.g. using a tool. Again in the particular example shown, the second oscillating arm 200 comprises at least one locking element 233, in the example, two anti-screwing locknuts 233, adapted and configured to prevent an undesired variation in length of the second oscillating arm 200.

In order to vary the length of the second oscillating arm 200 other similar or equivalent solutions are clearly possible, for example, comprising that the oscillating arm 200 has only two parts, which are mutually screwable or unscrewable, instead of three, as in the previously described example.

As a further example, it is possible to provide that the second oscillating arm 200 has at least two parts, which are mutually telescopically sliding, comprising locking means for locking the sliding, which are selectively activatable for adjusting the length of the second oscillating arm 200. As explained previously with reference to figures 6-11, if the length of the second oscillating arm 200 is adjustable, advantageously, it is possible to vary the shape of the kinematic system formed by the two oscillating arms 100, 200, by the steering bar 11 and by the support element 12 and therefore adjust the diving of the suspension 10 so as to adjust the pro-dive or anti-dive effect of the same. In other words, by varying the length of the second oscillating arm 200, it is possible to modify the shape of the four-bar linkage formed by the two oscillating arms 100, 200, by the steering bar 11 and by the support element 12. Therefore, the aforesaid expedient represents a possible example of adjustment means for varying the shape of the four-bar linkage. Additionally or alternatively, it is also possible to comprise that the aforesaid shape variation is obtained by comprising the possibility of adjusting the length of the first oscillating arm 100.

Additionally or alternatively, as a further example of adjustment means, adapted and configured to vary the shape of the four-bar linkage, it is possible to provide means, which allow adjusting the position of an articulation point 250, e.g. the hinging point, between the second oscillating arm 200 and the steering bar 11 along the steering bar 11. With reference to figure 14, in order to obtain this, it is possible, for example, to provide that the aforesaid articulation point 250 is arranged on a movable element 251 with respect to the steering bar 11, for example, sliding inside the same, and that means are comprised for selectively locking the sliding of the movable element 250. For example, the movable element can be a piston or a slider. The movable element 251 can be moved, for example, by means of a mechanical or electromechanical actuator 252, e.g. integrated into the steering bar 11. Again with reference to figure 14, in the particular example shown, the steering bar comprises a slotted hole defining the possible travel of the articulation point 250 along the steering bar 11, for example, receiving a pin coaxial to the articulation point 250. Again with reference to figure 14, note that a suspension is shown therein, which, having the second oscillating arm 200 described above with reference to figures 12 and 13, allows adjusting both the length of said second oscillating arm and the articulation point 250 of said second oscillating arm on the steering bar 11. However, this does not imply that the two adjustments must necessarily be comprised simultaneously.

In order to vary the articulation point, it is further possible to comprise that the articulation point 250 is selectable between a plurality of articulation points 250, 260, 270, defined discretely on the steering bar 11. To this end, it is possible to comprise two or more circular holes on the steering bar 11 each defining a respective hinge or articulation axis. With reference to the example in figure 3, for example, three articulation points 250, 260, 270 are comprised, which can be selected in a mutually exclusive manner to adjust the hinging point of the first end portion 201 of the second oscillating arm 200 on the steering bar 11.

Based on the above explanation, it is therefore possible to understand how an oscillating arm front suspension 10 of the type described above allows achieving the objects indicated above with reference to the prior art.

In fact, the aforesaid oscillating arm front suspension 10 has an improved capacity of reacting optimally to loads, allowing reducing or eliminating the pro-dive or anti-dive effect of the oscillating arm front suspensions of the prior art. The aforesaid oscillating arm suspension further also allows eliminating the flexural loads on the shock absorber assembly 30, therefore increasing the smoothness of the suspension 10.

## Claims

1. An oscillating arm front suspension (10) for a saddle riding vehicle (1) comprising:
- a steering bar (11) mechanically connected, or adapted to be connected, to a steering handlebar (7) of the saddle riding vehicle (1);
- a first oscillating arm (100) having a first end portion (101) and a second end portion (102) opposite to the first end portion (101), wherein the first end portion (101) of the first oscillating arm (100) is rotatably joined to the steering bar (11) and wherein the first oscillating arm (100) directly carries a rotation pin (103) of an associable front wheel (2) of the saddle riding vehicle (1);
- a shock absorber assembly (30) which extends between an attachment head (31) and an attachment foot (32);
- and the oscillating arm front suspension (10) is **characterized by** comprising: a support element (12) adapted and configured to support said shock absorber assembly (30) and a braking member (16), said attachment foot (32) being rotatably joined to said support element (12);
- a second oscillating arm (200) operatively interposed between the steering bar (11) and said support element (12), wherein said second oscillating arm (200) is rotatably joined to the steering bar (11) and to said support element (12).

2. An oscillating arm front suspension (10) according to claim 1, wherein the first end portion (101) of the first oscillating arm (100) is rotatably joined to the steering bar (11) at an end portion (11') of the steering bar (11).

3. An oscillating arm front suspension (10) according to claim 1 or 2, wherein the second oscillating arm (200) has a first end portion (201) rotatably joined, for example hinged, to the steering bar (11), and a second end portion (202) rotatably joined, for example hinged, to the support element (12).

4. An oscillating arm front suspension (10) according to any one of the preceding claims, wherein the rotation pin (103) defines a first rotation axis (A-A), the attachment foot (32) is rotatably joined to the support element (12) for rotating about a second rotation axis (B-B) and the second oscillating arm (200) is rotatably joined to the support element (12) so as to rotate about a third rotation axis (C-C), and wherein said first (A-A), said second (B-B), and said third (C-C) rotation axes are mutually aligned along a same plane.

5. An oscillating arm front suspension (10) according to any one of the preceding claims, wherein the steering bar (11), the first oscillating arm (100), the support element (12), and the second oscillating arm (200) are operatively connected to one another so as to form a four-bar linkage.

6. An oscillating arm front suspension (10) according to claim 5, wherein in said four-bar linkage, the first oscillating arm (100) and the second oscillating arm (200) form a first pair of mutually opposite elements of the four-bar linkage, and the steering bar (11) and the support element (12) form a second pair of mutually opposite elements of the four-bar linkage.

7. An oscillating arm front suspension (10) according to claim 5, comprising adjustment means adapted and configured to vary the shape of the four-bar linkage.

8. An oscillating arm front suspension (10) according to claim 7, wherein the second oscillating arm (200) is an arm with a varying length and wherein said adjustment means comprise said second oscillating arm (200).

9. An oscillating arm front suspension (10) according to claim 7 or 8, wherein said adjustment means comprise means adapted to vary the position of an articulation point between the steering bar (11) and the second oscillating arm (200).

10. An oscillating arm front suspension (10) according to any one of the preceding claims, wherein the first oscillating arm (100), the second oscillating arm (200), and the support element (12) are arranged and shaped so as not to exceed the radial occupancy of the associable front wheel (2).

11. An oscillating arm front suspension (10) according to any one of the preceding claims, wherein said braking member (16) comprises a caliper for a disk brake.

12. A motorcycle (1) comprising at least one oscillating arm front suspension (10) according to any one of the preceding claims.

13. A motorcycle (1) according to claim 12, wherein the motorcycle (1) is a scooter.

## Patentansprüche

1. Vorderradaufhängung (10) mit Schwingarm für ein Sattelfahrzeug (1), umfassend:
- eine Lenkstange (11), die mechanisch mit einer Lenkerstange (7) des Sattelfahrzeugs (1) verbunden oder ausgelegt ist, um damit verbunden zu werden;
- einen ersten Schwingarm (100), der einen ersten Endabschnitt (101) und einen zweiten Endabschnitt (102) gegenüber dem ersten Endabschnitt (101) aufweist, wobei der erste Endabschnitt (101) des ersten Schwingarms (100) drehbar mit der Lenkstange (11) verbunden ist, und wobei der erste Schwingarm (100) einen Drehstift (103) eines zugehörigen Vorderrads (2) des Sattelfahrzeugs (1) direkt trägt;
- eine Stoßdämpferanordnung (30), die sich zwischen einem Befestigungskopf (31) und einem Befestigungsfuß (32) erstreckt;
und die Vorderradaufhängung (10) mit Schwingarm **dadurch gekennzeichnet ist, dass** sie umfasst:
- ein Stützelement (12), das dazu ausgelegt und konfiguriert ist, die Stoßdämpferanordnung (30) und ein Bremselement (16) zu stützen, wobei der Befestigungsfuß (32) drehbar mit dem Stützelement (12) verbunden ist;
- einen zweiten Schwingarm (200), der funktionell zwischen der Lenkstange (11) und dem Stützelement (12) angeordnet ist, wobei der zweite Schwingarm (200) drehbar mit der Lenkstange (11) und dem Stützelement (12) verbunden ist.

2. Vorderradaufhängung (10) mit Schwingarm nach Anspruch 1, wobei der erste Endabschnitt (101) des ersten Schwingarms (100) an einem Endabschnitt (11') der Lenkstange (11) drehbar mit der Lenkstange (11) verbunden ist.

3. Vorderradaufhängung (10) mit Schwingarm nach Anspruch 1 oder 2, wobei der zweite Schwingarm (200) einen ersten Endabschnitt (201), der drehbar, beispielsweise angelenkt, mit der Lenkstange (11) verbunden ist, und einen zweiten Endabschnitt (202) aufweist, der drehbar, beispielsweise angelenkt, mit dem Stützelement (12) verbunden ist.

4. Vorderradaufhängung (10) mit Schwingarm nach einem der vorhergehenden Ansprüche, wobei der Drehstift (103) eine erste Drehachse (A-A) definiert, der Befestigungsfuß (32) drehbar mit dem Stützelement (12) verbunden ist, um sich um eine zweite Drehachse (B-B) zu drehen, und der zweite Schwingarm (200) drehbar mit dem Stützelement (12) verbunden ist, um sich um eine dritte Drehachse (C-C) zu drehen, und wobei die erste (A-A), die zweite (B-B) und die dritte (C-C) Drehachse entlang einer gleichen Ebene zueinander ausgerichtet sind.

5. Vorderradaufhängung (10) mit Schwingarm nach einem der vorhergehenden Ansprüche, wobei die Lenkstange (11), der erste Schwingarm (100), das Stützelement (12) und der zweite Schwingarm (200) funktionell miteinander verbunden sind, so dass ein Gelenkviereck entsteht.

6. Vorderradaufhängung (10) mit Schwingarm nach Anspruch 5, wobei in dem Gelenkviereck der erste Schwingarm (100) und der zweite Schwingarm (200) ein erstes Paar einander gegenüberliegender Elemente des Gelenkvierecks bilden und die Lenkstange (11) und das Stützelement (12) ein zweites Paar einander gegenüberliegender Elemente des Gelenkvierecks bilden.

7. Vorderradaufhängung (10) mit Schwingarm nach Anspruch 5, umfassend Einstellmittel, die dazu ausgelegt und konfiguriert sind, die Form des Gelenkvierecks zu variieren.

8. Vorderradaufhängung (10) mit Schwingarm nach Anspruch 7, wobei der zweite Schwingarm (200) ein Arm mit variierender Länge ist, und wobei die Einstellmittel den zweiten Schwingarm (200) umfassen.

9. Vorderradaufhängung (10) mit Schwingarm nach Anspruch 7 oder 8, wobei die Einstellmittel Mittel umfassen, die dazu ausgelegt sind, die Position eines Gelenkpunkts zwischen der Lenkstange (11) und dem zweiten Schwingarm (200) zu variieren.

10. Vorderradaufhängung (10) mit Schwingarm nach einem der vorhergehenden Ansprüche, wobei der erste Schwingarm (100), der zweite Schwingarm (200) und das Stützelement (12) so angeordnet und geformt sind, dass sie die radiale Belegung des zugehörigen Vorderrades (2) nicht überschreiten.

11. Vorderradaufhängung (10) mit Schwingarm nach einem der vorhergehenden Ansprüche, wobei das Bremselement (16) einen Bremssattel für eine Scheibenbremse umfasst.

12. Motorrad (1), das mindestens eine Vorderradaufhängung (10) mit Schwingarm nach einem der vorhergehenden Ansprüche umfasst.

13. Motorrad (1) nach Anspruch 12, wobei das Motorrad (1) ein Roller ist.

## Revendications

1. Suspension avant de bras oscillant (10) pour un véhicule à selle (1), comprenant :
- une barre de direction (11) reliée, ou adaptée pour être reliée, mécaniquement à un guidon de direction (7) du véhicule à selle (1) ;
- un premier bras oscillant (100) ayant une première partie d'extrémité (101) et une seconde partie d'extrémité (102) opposée à la première partie d'extrémité (101), dans laquelle la première partie d'extrémité (101) du premier bras oscillant (100) est jointe de manière rotative à la barre de direction (11) et dans laquelle le premier bras oscillant (100) porte directement une broche de rotation (103) d'une roue avant (2) associée du véhicule à selle (1) ;
- un ensemble amortisseur (30) qui s'étend entre une tête de fixation (31) et un pied de fixation (32) ;
et la suspension avant de bras oscillant (10) est **caractérisée en ce qu'**elle comprend :
- un élément de support (12) adapté à et conçu pour supporter ledit ensemble amortisseur (30) et un élément de freinage (16), ledit pied de fixation (32) étant joint de manière rotative audit élément de support (12) ;
- un second bras oscillant (200) interposé fonctionnellement entre la barre de direction (11) et ledit élément de support (12), dans laquelle ledit second bras oscillant (200) est joint de manière rotative à la barre de direction (11) et audit élément de support (12).

2. Suspension avant de bras oscillant (10) selon la revendication 1, dans laquelle la première partie d'extrémité (101) du premier bras oscillant (100) est jointe de manière rotative à la barre de direction (11) au niveau d'une partie d'extrémité (11') de la barre de direction (11).

3. Suspension avant de bras oscillant (10) selon la revendication 1 ou 2, dans laquelle le second bras oscillant (200) a une première partie d'extrémité (201) jointe de manière rotative, par exemple articulée, à la barre de direction (11), et une seconde partie d'extrémité (202) jointe de manière rotative, par exemple articulée, à l'élément de support (12).

4. Suspension avant de bras oscillant (10) selon l'une quelconque des revendications précédentes, dans laquelle la broche de rotation (103) définit un premier axe de rotation (A-A), le pied de fixation (32) est joint de manière rotative à l'élément de support (12) pour tourner autour d'un deuxième axe de rotation (B-B) et le second bras oscillant (200) est joint de manière rotative à l'élément de support (12) de manière à tourner autour d'un troisième axe de rotation (C-C), et dans laquelle lesdits premier (A-A), deuxième (B-B) et troisième (C-C) axes de rotation sont mutuellement alignés le long d'un même plan.

5. Suspension avant de bras oscillant (10) selon l'une quelconque des revendications précédentes, dans laquelle la barre de direction (11), le premier bras oscillant (100), l'élément de support (12) et le second bras oscillant (200) sont reliés fonctionnellement les uns aux autres de manière à former une liaison à quatre barres.

6. Suspension avant de bras oscillant (10) selon la revendication 5, dans laquelle, dans ladite liaison à quatre barres, le premier bras oscillant (100) et le second bras oscillant (200) forment une première paire d'éléments mutuellement opposés de la liaison à quatre barres et la barre de direction (11) et l'élément de support (12) forment une seconde paire d'éléments mutuellement opposés de la liaison à quatre barres.

7. Suspension avant de bras oscillant (10) selon la revendication 5, comprenant des moyens de réglage adaptés et conçus pour faire varier la forme de la liaison à quatre barres.

8. Suspension avant de bras oscillant (10) selon la revendication 7, dans laquelle le second bras oscillant (200) est un bras de longueur variable et dans laquelle lesdits moyens de réglage comprennent ledit second bras oscillant (200).

9. Suspension avant de bras oscillant (10) selon la revendication 7 ou 8, dans laquelle lesdits moyens de réglage comprennent des moyens adaptés pour faire varier la position d'un point d'articulation entre la barre de direction (11) et le second bras oscillant (200).

10. Suspension avant de bras oscillant (10) selon l'une quelconque des revendications précédentes, dans laquelle le premier bras oscillant (100), le second bras oscillant (200) et l'élément de support (12) sont disposés et conformés de manière à ne pas dépasser l'occupation radiale de la roue avant (2) pouvant être associée.

11. Suspension avant de bras oscillant (10) selon l'une quelconque des revendications précédentes, dans laquelle ledit élément de freinage (16) comprend un étrier pour un frein à disque.

12. Motocyclette (1) comprenant au moins une suspension avant de bras oscillant (10) selon l'une quelconque des revendications précédentes.

13. Motocyclette (1) selon la revendication 12, la motocyclette (1) étant une trottinette.
